# FASCICULE DE BREVET EUROPEEN

(11) **EP 2 501 657 B1**
(45) Date de publication et mention de la délivrance du brevet: **02.07.2014**
(21) Numéro de dépôt: 10773917.9
(22) Date de dépôt: 08.11.2010
(51) Int. Cl.: C02F 3/00, C02F 3/30

(54) **PROCEDE DE TRAITEMENT D'EAU AU SEIN D'UN REACTEUR BIOLOGIQUE SEQUENTIEL COMPRENANT UNE MESURE EN LIGNE DE LA CONCENTRATION EN NITRITES A L'INTERIEUR DUDIT REACTEUR**
VERFAHREN ZUR WASSERBEHANDLUNG MIT EINEM SEQUENZIELLEN BIOLOGISCHEN REAKTOR MIT MESSUNG DER NITRITKONZENTRATION IM REAKTOR
METHOD FOR TREATING WATER WITHIN A SEQUENTIAL BIOLOGICAL REACTOR INCLUDING AN IN-LINE MEASUREMENT OF THE NITRITE CONCENTRATION INSIDE SAID REACTOR

(30) Priorité: 20.11.2009 FR 0958205
(43) Date de publication de la demande: 26.09.2012
(73) Titulaire: Veolia Water Solutions & Technologies Support, 94417 Saint-Maurice Cedex (FR)
(72) Inventeur: LEMAIRE, Romain, F-75017 Paris (FR); CHAUZY, Julien, F-92160 Antony (FR); SORENSEN, Kim, F-77320 Jouy Sur Morin (FR)
(74) Mandataire: Provost, Antoine
(86) Numéro de dépôt international: PCT/EP2010/067004
(87) Numéro de publication internationale: WO 2011/061084

(56) Documents cités:
- US-A- 5 266 200

## Description

### 1. Domaine de l'invention

Le domaine de l'invention est celui du traitement d'eaux chargées en azote sous forme d'ammonium. L'invention trouve notamment son application dans le traitement d'effluents industriels ou municipaux tels que les surnageants de digesteurs anaérobies, les effluents issus du traitement des boues par oxydation par voie humide, les condensats de traitement de gaz, les condensats de traitement de boues d'épuration, les lixiviats de décharges, les effluents d'abattoir, les lisiers de porcs ou tout autre type d'effluent chargé en azote sous forme d'ammonium.

Plus précisément, l'invention concerne un procédé de traitement d'eau mettant en oeuvre un réacteur biologique séquentiel (RBS) à l'intérieur duquel sont successivement mises en oeuvre notamment des étapes de traitement biologique aérées et anoxiques.

### 2. Art antérieur

Les procédés biologiques de traitement d'eau sont couramment mis en oeuvre afin d'abattre la teneur en pollution azotée des eaux.

Au rang de ces procédés biologiques figure le procédé de nitrification-dénitrification mis en oeuvre en réacteur biologique séquentiel (RBS).

Un tel procédé consiste à introduire une eau à traiter dans un réacteur biologique à l'intérieur duquel sont alternativement mises en oeuvre des phases aérées et des phases anoxiques.

Au cours des phases aérées, l'injection d'oxygène (sous forme d'air ou d'oxygène pur par exemple) dans le réacteur promeut le développement d'une biomasse nitrifiante autotrophe permettant la transformation de l'azote sous forme d'ammonium (NH₄⁺) en nitrates (NO₃⁻) constituée en fait d'une biomasse transformant l'azote sous forme d'ammonium (NH₄⁺) en nitrites (NO₂⁻) dite biomasse AOB (« *ammonia oxidising bacteria »*) et d'une biomasse transformant les nitrites (NO₂⁻) en nitrates (NO₃⁻), dite biomasse NOB (« *nitrites oxidising bacteria* »)

Au cours des phases anoxiques, l'arrêt de l'aération du réacteur promeut le développement d'une biomasse dénitrifiante qui réduit les nitrates en azote gazeux moléculaire (diazote) N₂ en passant par le stade nitrites. Cette biomasse dénitrifiante est de nature hétérotrophe, c'est-à-dire qu'elle ne peut se développer qu'en présence d'une source de carbone organique.

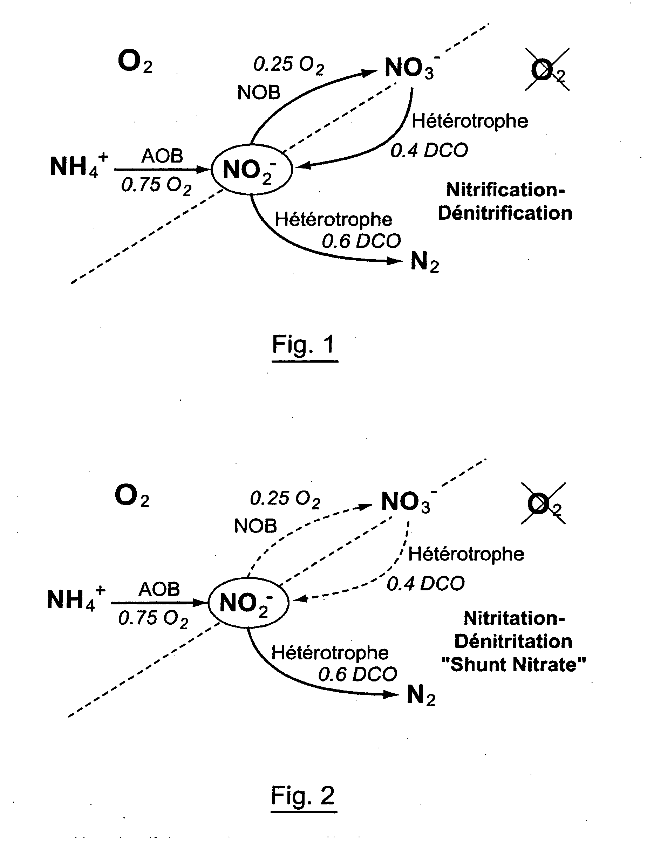

Ce procédé d'abattement de la pollution azotée par nitrification-dénitrification est représenté de façon schématique à la figure 1.

Un tel procédé de traitement biologique est particulièrement efficace du fait que sa mise en oeuvre conduit à abattre, de manière non négligeable, la teneur en pollution azotée de l'eau. Il présente toutefois quelques inconvénients. Notamment, sa mise en oeuvre requiert d'injecter dans le réacteur une quantité relativement importante d'oxygène pour assurer la transformation de l'ammonium en nitrates. En outre, la plupart des eaux à traiter ont une teneur en pollution organique (DBO, Demande Biochimique en Oxygène) trop faible pour permettre d'abattre de manière satisfaisante la pollution azotée par nitrification-dénitrification. Il est ainsi souvent nécessaire d'injecter du carbone dans le réacteur sous forme de réactifs (par exemple un substrat carboné facilement biodégradable) de manière à ce que les bactéries de type hétérotrophe puissent assurer l'élimination des nitrates en quantité satisfaisante.

Un tel procédé de traitement par nitrification-dénitrification est ainsi relativement coûteux à mettre en oeuvre du fait de la consommation assez importante en oxygène et en réactif carboné qu'elle implique.

Afin de pallier au moins en partie ces inconvénients, un procédé a été développé visant à abattre la pollution sous forme d'ammonium en minimisant la formation de nitrates. Ce procédé dit de nitritation-dénitritation également appelé « shunt des nitrates » consiste à introduire une eau à traiter dans un réacteur biologique séquentiel à l'intérieur duquel sont alternativement mises en oeuvre des phases aérées et des phases anoxiques sous des conditions opérationnelles assurant une pression sélective pour promouvoir le développement des bactéries AOB au détriment des bactéries NOB. Ces conditions opérationnelles peuvent être une concentration élevée en ammonium (NH₄⁺), une faible concentration en oxygène dissous durant les phases aérées, une température supérieure à 28°C, un faible âge de boues ou plusieurs conditions opérationnelles combinées.

Au cours des phases aérées, l'injection d'oxygène dans le réacteur permet le développement de bactéries de type AOB qui agissent sur l'azote ammoniacal (NH₄⁺) pour former des nitrites (NO₂⁻). L'utilisation d'un réacteur biologique séquentiel permet d'obtenir de fortes concentrations en ammonium après chaque séquence d'alimentation de l'eau à traiter dans le réacteur. Les bactéries NOB étant plus inhibées par les fortes concentrations en ammonium que les bactéries AOB, leur développement est ainsi limité. D'autre part, l'oxygène est injecté de façon à maintenir de préférence une faible concentration en oxygène dissous dans le réacteur, afin de favoriser le développement des bactéries AOB au détriment des bactéries NOB du fait d'une meilleure affinité pour l'oxygène des bactéries AOB. La production de nitrates à partir des nitrites par la biomasse NOB se trouve ainsi limitée.

Au cours des phases anoxiques, la biomasse hétérotrophe est essentiellement dévolue à la transformation des nitrites en azote moléculaire, la teneur en nitrates étant faible. Cette biomasse hétérotrophe se trouve en concurrence avec la biomasse NOB pour la consommation des nitrites et contribue à limiter la croissance de cette dernière.

Ce procédé d'abattement de la pollution azotée par « shunt des nitrates » est représenté de façon schématique à la figure 2.

La mise en oeuvre d'un tel procédé de nitritation-dénitritation permet, comparativement à celle d'un procédé de nitrification-dénitrification classique tel que décrit en figure 1, de réduire d'environ 25% la consommation en oxygène et d'environ 40% la consommation en réactifs carbonés. Elle permet ainsi d'abattre de manière satisfaisante la pollution azotée d'une eau de manière plus économique.

Il est également connu dans l'état de la technique un autre procédé biologique dit de « nitritation-déammonification ». Celui-ci permet de réduire encore davantage le coût inhérent au traitement de la pollution azotée d'une eau.

Un tel procédé consiste à introduire une eau à traiter dans un réacteur biologique séquentiel à l'intérieur duquel sont alternativement mises en oeuvre des phases aérées et des phases anoxies en minimisant la formation de nitrates par des conditions opérationnelles sélectives et en mettant en oeuvre une biomasse spécifique dite biomasse « anammox ».

Au cours des phases aérées, la mise en oeuvre des mêmes conditions opérationnelles que celles décrites précédemment pour le procédé « shunt des nitrates » permet de sélectionner des bactéries AOB au détriment des bactéries NOB et de minimiser la production de nitrates à partir des nitrites par la biomasse NOB.

Au cours des phases anoxies, des bactéries de type anammox se développent et agissent sur les ions ammonium et sur les nitrites pour former du diazote (N₂) gazeux ainsi qu'une petite quantité de nitrates sans consommer de carbone organique puisqu'il s'agit de bactéries autotrophes, à la différence de la biomasse hétérotrophe responsable de l'étape de dénitritation dans le procédé « shunt des nitrates ».

Lorsque l'étape de dénitritation, consistant en la dégradation des nitrites sous forme de diazote (N₂) gazeux, implique des bactéries de type anammox, cette étape dite de dénitritation est plus précisément nommée déammonification.

La mise en oeuvre d'un tel procédé de « nitritation-déammonification » permet, comparativement à celle d'un procédé de « nitrification-dénitrification » classique, de réduire d'environ 60% la consommation en oxygène et d'environ 90% la consommation en réactifs carbonés. Elle permet ainsi d'abattre de manière satisfaisante la pollution azotée d'une eau de manière encore plus économique.

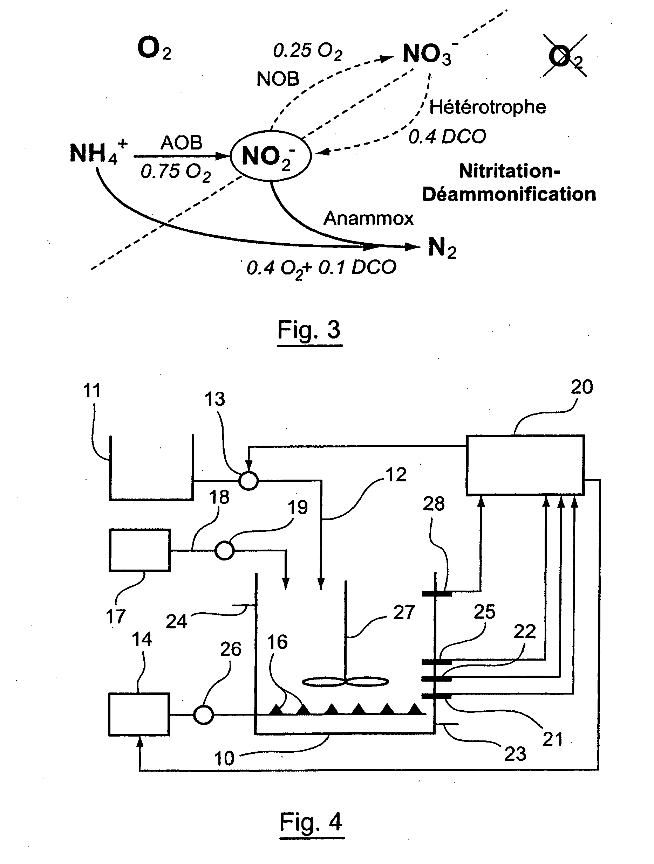

Ce procédé d'abattement de la pollution azotée par «nitritation-déammonification » est représenté de façon schématique à la figure 3.

Lors de la mise en oeuvre des procédés « shunt des nitrates » et « nitritation -déammonification » plusieurs paramètres sont généralement contrôlés de manière à piloter le déroulement des différentes réactions qu'ils impliquent.

La demande internationale de brevet WO-A1-2007/014994 décrit un procédé de traitement d'eau par nitritation-dénitritation au sein d'un réacteur biologique séquentiel au cours duquel sont mesurés :
- la conductivité et le débit de l'effluent à traiter ;
- la concentration en O₂ dissous, le pH et le potentiel redox dans le réacteur de manière à déterminer le nombre minimal de phases d'alimentation du réacteur, la durée des phases d'aération et d'anoxie ainsi que les quantités de réactif carboné devant être apportées.

La demande de brevet français FR-A1-2921917 décrit un procédé de traitement d'eau par nitritation-déammonification au sein d'un réacteur biologique séquentiel au cours duquel sont mesurés :
- le débit, la conductivité, la température et le pH de l'effluent à traiter pour déterminer la charge à traiter en azote et le nombre de séquences de traitement à effectuer ;
- la concentration en oxygène dissous, la conductivité, la température, le pH et la concentration en ammonium dans le réacteur pour contrôler le déroulement du processus biologique durant les phases d'aération et de non aération et déterminer leur durée ;
- la conductivité et le débit de l'eau traitée pour déterminer le rendement du traitement et ajuster de manière rétroactive le procédé.

La mise en oeuvre de ces principes de pilotage permet d'abattre de manière efficace la teneur en pollution azotée de l'eau tout en améliorant la maîtrise de la consommation en oxygène et en réactifs carbonés.

### 3. Inconvénients de l'art antérieur

Toutefois, la mise en oeuvre de ces principes de pilotage ne permet pas d'optimiser la durée des phases d'aération et d'anoxie, et ainsi celle du cycle complet dans le RBS. Par conséquent, elle ne permet pas d'ajuster en fonction des besoins ni la consommation en oxygène, ni la consommation en substrats carbonés lorsque cela est nécessaire (c'est-à-dire lors de la mise en oeuvre d'un procédé de type « shunt des nitrates »).

En effet, cet ajustement implique, dans ces techniques de l'art antérieur, de mesurer un certain nombre de variables pour connaître l'état d'avancement de la réaction dans lequel se trouve le réacteur biologique. Ces techniques sont donc relativement complexes à mettre en oeuvre et font appel à de nombreuses techniques de mesures.

En outre, les variables mesurées ne permettent pas de connaître avec précision l'état du procédé, c'est-à-dire l'état d'avancement des processus biologiques mis en oeuvre (nitritation, denitritation, déammonification) ainsi que l'état de progression de l'abattement de la pollution azotée.

En d'autres termes, bien que la mise en oeuvre de ces principes de pilotage conduit à améliorer la maîtrise des procédés de traitement de type « shunt des nitrates » et « nitritation-déammonification », elle ne permet pas d'ajuster en fonction des besoins la consommation en oxygène, la consommation en réactifs carbonés lorsque cela est nécessaire ou d'optimiser la durée des phases d'aération et d'anoxie, donc la durée du cycle complet dans le RBS, de manière telle que les processus biologiques impliqués soient mis en oeuvre de manière optimale.

### 4. Objectifs de l'invention

L'invention a notamment pour objectif de pallier ces inconvénients de l'art antérieur et d'améliorer les performances des procédés de traitement de type « shunt des nitrates » et « nitritation-déammonification » comprenant chacun une étape de formation de nitrites (nitritation) et une étape dégradation des nitrites (dénitritation).

Plus précisément, un objectif de l'invention est de fournir, dans au moins un mode de réalisation, une technique de traitement d'eau par nitritation-dénitritation dont les performances et la fiabilité soient améliorées comparativement aux techniques de l'art antérieur.

Notamment, un objectif de l'invention est de procurer, dans au moins un mode de réalisation de l'invention, une telle technique qui permette de mieux maîtriser les processus biologiques mis en oeuvre dans un traitement d'eau par nitritation-dénitritation.

Encore un objectif de l'invention est de fournir, dans au moins un mode de réalisation, une telle technique qui soit plus économique à mettre en oeuvre que les techniques de l'art antérieur.

Plus précisément, un objectif de l'invention est de mettre en oeuvre, dans au moins un mode de réalisation, une telle technique qui permette d'ajuster en fonction des besoins la consommation en oxygène, la consommation en réactifs carbonés lorsque nécessaire et d'optimiser la durée des phases d'alimentation, d'aération et d'anoxie, donc la durée du cycle complet dans le RBS. Un objectif de l'invention est ainsi d'optimiser la durée totale d'un cycle.

Encore un objectif de l'invention est de fournir, dans au moins un mode de réalisation, une telle technique qui permette de réduire le volume du réacteur biologique séquentiel par rapport aux techniques de l'art antérieur à quantité égale d'eau à traiter.

### 5. Exposé de l'invention

Ces objectifs, ainsi que d'autres qui apparaîtront par la suite, sont atteints selon l'invention à l'aide d'un procédé de traitement d'une eau chargée en azote sous forme d'ammonium, ledit procédé comprenant au moins:
- une première étape (i) d'alimentation en ladite eau d'un réacteur biologique séquentiel ;
- une étape (ii) aérée de nitritation ;
- une étape (iii) anoxie de dénitritation ;
- une étape (iv) d'extraction d'une eau traitée dudit réacteur ;
- une mesure en ligne de la concentration en nitrites de ladite eau présente dans ledit réacteur
- au moins une étape de contrôle d'au moins une étape du procédé, ladite étape de contrôle tenant compte des résultats de ladite mesure en ligne de la concentration en nitrites.

Ainsi, l'invention repose sur une approche tout à fait innovante qui consiste à mettre en oeuvre, dans un procédé de traitement d'eau par nitritation-dénitritation, une mesure en ligne de la concentration en nitrites de l'eau présente dans le réacteur biologique séquentiel au sein duquel ont lieu les réactions de nitritation et de dénitritation dans le but de mieux maîtriser les processus biologiques impliqués dans un tel traitement.

En effet, la connaissance de la concentration en nitrites de l'eau présente dans le réacteur donne une indication précise sur l'état du procédé, c'est-à-dire sur le niveau d'avancement des processus biologiques mis en oeuvre ainsi que sur l'état de progression de l'abattement de la pollution azotée. En d'autre terme, la connaissance de cette information permet de contrôler et de gérer au mieux le déroulement de ces processus et/ou d'autre(s) étape(s) du procédé et donc d'optimiser ses performances.

La mesure de la concentration en nitrites s'effectue en ligne, c'est-à-dire qu'elle est effectuée directement sur le site de production et non dans un laboratoire après prélèvement d'échantillons.

Cette mesure peut être réalisée directement, c'est-à-dire par le moyen d'une sonde mesurant directement la concentration en ions nitrites en solution, ou indirectement, c'est-à-dire par exemple par le moyen d'une sonde mesurant en solution les formes oxydées de l'azotes (aussi appeler NOX) ainsi que les ions nitrates, et en en déduisant la concentration en nitrites par calcul.

Au sens de l'invention, la dénitritation est une étape au cours de laquelle des nitrites sont dégradés en diazote gazeux. Cette dégradation peut impliquer des bactéries de type hétérotrophes et/ou de type anammox. Lorsque l'étape de dénitritation implique des bactéries de type anammox, celle-ci est plus précisément nommée « déammonification ».

Les étapes d'alimentation et d'aération peuvent être mise en oeuvre de manière concomitante afin de réduire la durée du traitement.

Un procédé selon l'invention peut comprendre un unique cycle comprenant une alimentation du réacteur avec la totalité de l'eau à traiter, une nitritation, une dénitritation et une extraction d'eau traitée. Selon une autre approche, un procédé selon l'invention peut comprendre une pluralité de sous cycles comprenant chacun une alimentation du réacteur avec une portion seulement de l'eau à traiter, une nitritation et une dénitritation. Plusieurs sous cycles sont alors successivement mis en oeuvre jusqu'à ce que l'ensemble du volume d'eau à traiter ait été introduit et traité dans le réacteur. L'eau traitée peut ensuite être extraite du réacteur.

Selon une caractéristique avantageuse, un tel procédé comprend une étape de contrôle de ladite étape d'alimentation.

La connaissance de la concentration en nitrites dans le réacteur permet en effet de contrôler efficacement l'alimentation en eau du réacteur de façon telle que la mise en oeuvre du procédé soit optimisée.

Dans ce cas, un procédé selon l'invention comprend préférentiellement une mesure en ligne de la concentration en ions ammonium de ladite eau présente dans ledit réacteur, ladite étape de contrôle de ladite étape d'alimentation comprenant les étapes suivantes :
- calcul de la somme de ladite concentration en nitrites et de ladite concentration en ions ammonium ;
- comparaison de ladite somme à une première valeur seuil prédéterminée ;
- arrêt de ladite étape d'alimentation dès que ladite somme est supérieure à ladite première valeur seuil.

Il a été remarqué qu'une concentration importante en ammonium à l'intérieur du réacteur engendre nécessairement une forte concentration en nitrites à l'intérieur du réacteur. Les bactéries de type AOB transforment en effet l'ammonium en nitrites.

En outre, il a été remarqué que lorsque la concentration en nitrites à l'intérieur du réacteur est trop importante, la biomasse de type AOB impliquée dans la nitritation est inhibée par l'acide nitreux (HNO₂) qui est en équilibre chimique avec les nitrites en phase aqueuse.

Ainsi, la connaissance de la concentration en nitrites à l'intérieur du réacteur permet d'arrêter l'alimentation dudit réacteur en eau chargée en ammonium de manière telle que la nitritation ne soit pas inhibée et que les performances d'épuration du procédé ne soient pas affectées.

Selon une caractéristique avantageuse, un tel procédé comprend une étape de contrôle de la durée de ladite étape aérée de nitritation.

La connaissance de la concentration en nitrites dans le réacteur permet en effet de contrôler efficacement l'aération du réacteur de façon telle que la mise en oeuvre du procédé soit optimisée.

Dans ce cas, ladite étape de contrôle de la durée de ladite étape aérée de nitritation comprend les étapes suivantes :
- comparaison de ladite concentration en nitrites à une deuxième valeur seuil prédéterminée ;
- arrêt de ladite étape aérée de nitritation dès que ladite concentration en nitrites est supérieure à ladite deuxième valeur seuil prédéterminée.

Il a été remarqué que lorsque la concentration en nitrites dans le réacteur devient importante au cours de l'étape d'aération du réacteur, la biomasse de type AOB impliquée dans la nitritation est inhibée. La connaissance de la concentration en nitrites dans le réacteur permet d'arrêter l'aération du réacteur et d'initier une phase anoxie dès que sa valeur devient telle qu'elle engendrerait une inhibition de la biomasse de type AOB. Les nitrites produits seront alors dégradés en diazote gazeux dû à l'activité des bactéries hétérotrophes ou anammox pendant ladite phase anoxie.

Selon une autre caractéristique avantageuse, un tel procédé comprend une étape de contrôle de la durée de ladite étape anoxie de dénitritation.

La connaissance de la concentration en nitrites dans le réacteur permet en effet de contrôler efficacement la durée de la phase anoxie de façon que la mise en oeuvre du procédé soit optimisée.

Dans ce cas, ladite étape de contrôle de la durée de ladite étape anoxie de dénitritation comprend préférentiellement les étapes suivantes :
- comparaison de ladite concentration en nitrites à une troisième valeur seuil prédéterminée ;
- arrêt de ladite étape anoxie de dénitritation dès que ladite concentration en nitrites est inférieure à ladite troisième valeur seuil prédéterminée.

En outre les inventeurs ont remarqué que lorsque la concentration en nitrites à l'intérieur du réacteur devient très faible, la cinétique de la réaction de dénitritation devient plus lente. Il peut donc être préférable de stopper la phase anoxie afin d'avoir toujours des cinétiques de consommation des nitrites les plus élevées possible. Ainsi, dès que la concentration en nitrites dans le réacteur atteint un seuil bas prédéterminé, l'étape d'anoxie doit être arrêtée et l'étape suivante peut débuter. Les inventeurs ont observé que le fait de terminer la phase anoxie avant que la concentration en nitrites soit nulle permet d'améliorer les performances d'épuration du procédé en maximisant les cinétiques de consommation des nitrites durant la phase anoxique.

Selon un premier mode de réalisation, ladite étape anoxie de dénitritation comprend une étape de mise en contact de ladite eau avec des bactéries hétérotrophes.

Le procédé selon l'invention fonctionne alors dans une configuration « shunt des nitrates » : l'ammonium est transformé en nitrites par des bactéries AOB, puis les nitrites sont transformés en diazote gazeux par des bactéries hétérotrophes.

Dans ce cas, ladite étape anoxie de dénitritation comprend une étape d'injection de carbone dans ledit réacteur, ledit procédé comprenant en outre une étape de contrôle de ladite étape d'injection de carbone, ladite étape de contrôle de ladite étape d'injection de carbone comprenant les étapes suivantes :
- comparaison de ladite concentration en nitrites avec une quatrième valeur seuil prédéterminée ;
- arrêt de ladite étape d'apport en carbone dès que ladite concentration en nitrites est inférieure à ladite quatrième valeur seuil.

Pour transformer les nitrites en diazote gazeux, les bactéries hétérotrophes consomment du carbone organique. Toutefois, certaines eaux à traiter ont une teneur relativement faible en carbone organique. Il est alors nécessaire d'injecter un substrat carboné dans le réacteur lors des phases anoxiques. Les inventeurs ont remarqué que si l'ajout d'un tel substrat carboné dans le réacteur est trop important, ce substrat carboné facilement biodégradable ne sera pas totalement consommé durant la phase anoxique correspondante et l'oxygène injecté dans le réacteur lors de la phase aérée suivante sera principalement utilisé par les bactéries hétérotrophes pour abattre ce substrat carboné en excès, et non par les bactéries AOB pour former des nitrites à partir de l'ammonium. Il est dans ce cas observé une forte diminution des cinétiques de formation de nitrites lors de la phase aérée suivante mais aussi une forte augmentation de la quantité de boues formées par le développement rapide des bactéries hétérotrophes, ainsi qu'une consommation excessive d'oxygène. En outre, une injection trop importante de substrat carboné induit des coûts élevés de fonctionnement. Ainsi, le fait d'arrêter d'injecter du carbone dans le réacteur alors que la concentration en nitrites devient inférieure à un seuil prédéterminé, permet d'ajuster aux besoins les quantités de carbone injectées dans le réacteur et d'éviter le surdosage et ces conséquences négatives lors de la phase aérée suivante. Les coûts inhérents aux injections de carbone, à l'injection d'oxygène et à l'évacuation de la surproduction de boues sont ainsi réduits et les performances d'épuration du procédé sont sécurisées. En outre, la durée des étapes du procédé sont réduites. Ceci permet de produire une quantité d'eau traitée égale tout en réduisant le dimensionnement du réacteur biologique mis en oeuvre à cet effet.

Selon une variante préférentielle non limitative, ladite première valeur seuil est comprise entre 1mgN/L et 400mgN/L et avantageusement comprise entre 50mgN/L et 250mgN/L, ladite deuxième valeur seuil est comprise entre 1mgN-NO2/L et 250mgN-N02/L et avantageusement comprise entre 10mgN-NO2/L et 120mgN-NO2/L, ladite troisième valeur seuil est comprise entre 0mgN-NO2/L et 120mgN-NO2/L et avantageusement comprise entre 0mgN-NO2/L et 50mgN-NO2/L et ladite quatrième valeur seuil est comprise entre 0mgN-NO2/L et 120mgN-NO2/L et avantageusement comprise entre 0mgN-NO2/L et 50mgN-NO2/L.

Selon un deuxième mode de réalisation, ladite étape anoxie de dénitritation comprend une étape de mise en contact de ladite eau avec des bactéries anammox.

Le procédé selon l'invention fonctionne alors dans une configuration nitritation-déammonification : une partie des ions ammonium est transformée en nitrites par des bactéries AOB, puis les nitrites et le reste des ions ammoniums sont transformés en diazote gazeux par des bactéries anammox.

L'eau à traiter peut être ou non carencée en alcalinité selon la valeur de son Titre Alcalimétrique Complet (TAC).

Lorsque l'eau à traiter n'est pas carencée en alcalinité, les conditions régnant à l'intérieur du réacteur permettent de transformer en nitrites de manière totale l'ammoniaque contenu dans le volume d'eau à traiter introduit dans celui-ci.

Dans ce cas, ladite étape (ii) aérée de nitritation est suivie d'une deuxième étape d'alimentation sans aération qui comprend les étapes suivantes :
- calcul du ratio de ladite concentration en ammonium sur ladite concentration en nitrites ;
- comparaison dudit ratio à une cinquième valeur seuil ;
- arrêt de ladite deuxième étape (i) d'alimentation dès que ledit ratio est supérieur à ladite cinquième valeur seuil.

L'ensemble de l'ammonium de la première portion d'eau à traiter introduite dans le réacteur est transformé en nitrites à l'issue de la première alimentation. Une deuxième alimentation est ensuite mise en oeuvre. Celle-ci est arrêtée dès que les concentrations en ammonium et en nitrites à l'intérieur du réacteur sont propices au traitement de l'ammonium et des nitrites par les bactéries anammox. Une étape de dénitritation mettant en oeuvre des bactéries anammox peut alors être mise en oeuvre.

Lorsque l'eau à traiter est carencée en alcalinité, le pH permettant aux bactéries AOB de fonctionner ne peut être conservé. Les conditions régnant à l'intérieur du réacteur ne permettent alors pas de transformer en nitrites de manière totale l'ammoniaque contenu dans le volume d'eau à traiter introduit dans celui-ci.

Dans ce cas, ladite étape de contrôle de ladite étape (ii) aérée de nitritation comprend en outre les étapes suivantes :
- calcul du ratio de ladite concentration en ammonium sur ladite concentration en nitrites ;
- comparaison dudit ratio à une cinquième valeur seuil ;
- arrêt de ladite étape (ii) aérée de nitritation dès que ladite concentration en nitrite est supérieure à ladite deuxième valeur seuil prédéterminée anammox) ou que ledit ratio est inférieur à ladite cinquième valeur seuil.

La nitritation est alors arrêtée dès que les concentrations en ammonium et en nitrites à l'intérieur du réacteur sont propices au traitement de l'ammonium et des nitrites par les bactéries anammox et avant d'atteindre le seuil d'inhibition des bactéries AOB et anammox.

Préférentiellement, ladite première valeur seuil est comprise entre 1 et 300 mgN/L et avantageusement entre 10 et 200mgN/L, ladite deuxième valeur seuil est comprise entre 1 et 150 mgN-N02/L et avantageusement entre 1 et 100mgN-NO2/L, ladite troisième valeur seuil est comprise entre 0 et 100 mgN-NO2/L et avantageusement entre 0 et 50mgN-NO2/L, ladite cinquième valeur seuil est comprise entre 0.6 et 1,2 et avantageusement entre 0.6 et 1.

L'invention concerne également une installation de traitement d'une eau comprenant au moins :
- un réacteur biologique séquentiel ;
- des moyens d'alimentation en eau dudit réacteur ;
- des moyens d'aération dudit réacteur ;
- des moyens de contrôle desdits moyens d'alimentation en eau dudit réacteur et desdits moyens d'aération dudit réacteur,
lesdits moyens de contrôle comprennent des moyens de mesure en ligne de la concentration en nitrites de ladite eau présente dans ledit réacteur.

### 6. Liste des figures

D'autres caractéristiques et avantages de l'invention apparaîtront plus clairement à la lecture de la description suivante de différents modes de réalisation préférentiels, donnés à titre de simples exemples illustratifs et non limitatifs, et des dessins annexés, parmi lesquels :
- la figure 1 est un schéma relatif à un procédé d'abattement de la pollution azotée par nitrification-dénitrification selon l'art antérieur ;
- la figure 2 est un schéma relatif à un procédé d'abattement de la pollution azotée par nitritation-denitritation « shunt des nitrates » selon l'art antérieur ;
- la figure 3 est un schéma relatif à un procédé d'abattement de la pollution azotée par nitritation-déammonification selon l'art antérieur ;
- la figure 4 représente une installation de traitement d'eau selon l'invention ;
- la figure 5 illustre les profils de concentration en NH₄, en NO₂ et en NO₃ dans un réacteur ainsi que le volume d'effluent à traiter ajouté dans le réacteur au cours d'un essai de traitement d'un l'effluent par la mise en oeuvre d'un procédé selon l'invention par shunt des nitrates comprenant quatre sous-cycles.

### 7. Description d'un mode de réalisation de l'invention

### 7.1. Rappel du principe de l'invention

Le principe général de l'invention repose sur la mise en oeuvre, dans un procédé de traitement d'eau chargée en azote sous forme d'ammonium par nitritation-dénitritation, d'une étape de mesure en ligne de la concentration en nitrites de l'eau présente dans le réacteur biologique séquentiel au sein duquel ont lieu les réactions de nitritation et de dénitritation et d'au moins une étape de contrôle d'au moins une étape du procédé, ladite étape de contrôle tenant compte des résultats de ladite mesure en ligne de la concentration en nitrites, dans le but de mieux maîtriser les processus biologiques impliqués dans un tel traitement.

Les inventeurs ont mis en évidence que la connaissance de la concentration en nitrites de l'eau présente dans le réacteur donne une indication précise sur l'état du procédé, c'est-à-dire sur le niveau d'avancement des processus biologiques mis en oeuvre ainsi que l'état de progression de l'abattement de la pollution azotée. En d'autre terme, la connaissance de cette information permet de gérer au mieux le déroulement de ces processus.

### 7.2. Exemple d'une installation selon l'invention

On présente, en relation avec la figure 4, un mode de réalisation d'une installation de traitement d'eau selon l'invention.

Ainsi que cela est représenté sur cette figure 4, une telle installation comprend des moyens d'alimentation en eau d'un réacteur biologique séquentiel 10 agité.

Les moyens d'alimentation comprennent :
- une cuve tampon 11, logeant un agitateur 27, destinée à contenir une eau à traiter enrichie en azote sous forme d'ammonium ;
- une canalisation d'alimentation 12 qui met en relation la cuve tampon 11 avec le réacteur biologique séquentiel 10, et
- une pompe 13 qui permet, selon qu'elle est ou non mise en oeuvre, d'alimenter ou non en eau à traiter le réacteur biologique séquentiel 10.

Des moyens d'aération permettent d'injecter de l'oxygène dans le réacteur biologique séquentiel 10. Ces moyens d'aération comprennent un surpresseur 14 et une vanne de régulation d'oxygène 26 qui sont reliés via une canalisation 15 à des diffuseurs d'air 16. Ces diffuseurs d'air 16 sont logés dans une partie inférieure du réacteur biologique séquentiel 10.

Des moyens d'injection de carbone permettent d'injecter du substrat carboné dans le réacteur biologique séquentiel 10. Ces moyens d'injection comprennent, une cuve 17 destiné à contenir le substrat carboné, une canalisation d'injection 18 mettant en relation la cuve 17 et le réacteur biologique séquentiel 10, et une pompe 19 qui permet, selon qu'elle est ou non mise en oeuvre, d'injecter ou non ce substrat dans le réacteur biologique séquentiel 10.

Cette installation comprend des moyens de contrôle des moyens d'alimentation en eau du réacteur biologique séquentiel 10, des moyens d'aération du réacteur biologique séquentiel 10, et des moyens d'injection de carbone dans le réacteur biologique séquentiel.

Ces moyens de contrôle comprennent une armoire de commande 20, pouvant par exemple comprendre un microcontrôleur ou un ordinateur, ainsi qu'une sonde d'ions ammonium 21 et une sonde de nitrites 22 et une sonde d'oxygène 25 qui sont destinées à permettre de mesurer la concentration en ammonium, en nitrites et en oxygène de l'eau contenue dans le réacteur biologique séquentiel 10. L'armoire de commande 20 est destinée à comparer les mesures réalisées au moyen des sondes d'ammonium 21, de nitrites 22, et d'oxygène 25 puis de les comparer à des valeurs seuil, et de piloter en conséquence la mise en oeuvre de la pompe 13, de la pompe 19, du surpresseur 14 et de la vanne de régulation en O₂ 26 comme il sera expliqué plus en détail par la suite. Le réacteur biologique séquentiel 10 présente une canalisation d'extraction de boues 23 et une canalisation d'extraction d'eau traitée 24. La mise en oeuvre de la sonde à oxygène peut permettre de réguler la concentration en oxygène dans le réacteur. La régulation oxygène pourra par exemple fonctionner sur consigne: en phase aérée, lorsque la valeur mesurée sur la sonde oxygène est supérieure à une Valeur consigne, l'armoire commande la vanne de régulation d'oxygène en sorte que moins d'oxygène soit délivré dans le RBS. Inversement, lorsque la valeur mesurée sur la sonde oxygène est inférieure à la Valeur consigne, l'armoire pilote la vanne de régulation d'oxygène en sorte que plus d'oxygène soit délivré dans le RBS. En pratique cette Valeur consigne sera comprise entre 0,1 et 3 m g O2/L.

Dans une variante non représentée, le réacteur biologique séquentiel d'une telle installation peut en outre comprendre une sonde pH, une sonde à nitrates, une sonde de température. Dans ce cas, la mesure du pH peut être transmise à l'armoire de commande de manière à contrôler l'injection de réactif dans le réacteur pour modifier le pH de l'eau à traiter.

Dans une variante non représentée, la sonde d'ammonium peut être remplacée par une sonde de conductivité. Il est en effet bien connu de l'homme du métier qu'il est possible de déduire de la conductivité de l'eau située dans le réacteur biologique séquentiel sa concentration approximative en ammonium.

### 7.3. Exemples de procédés selon l'invention

### 7.3.1. Configuration « Shunt des nitrates »

Un procédé selon l'invention de traitement d'une eau chargée en azote sous forme d'ammonium mettant en oeuvre un processus de type shunt des nitrates va à présent être décrit.

Selon ce mode de réalisation, le procédé de traitement consiste à traiter l'eau par portions successives du volume total à traiter.

Selon un tel procédé, le réacteur biologique séquentiel 10 est alimenté en eau à traiter. Pour cela, l'armoire de commande 20 pilote la mise en oeuvre de la pompe 13 en sorte que de l'eau à traiter contenue dans la cuve tampon 11 soit déversée via la canalisation d'alimentation 12 dans le réacteur biologique séquentiel 10.

L'armoire de commande 20 pilote en parallèle, c'est-à-dire pendant la phase d'alimentation du réacteur, la mise en oeuvre du surpresseur 14 et de la vanne de régulation d'oxygène 26 en sorte que de l'oxygène soit introduit dans le réacteur biologique séquentiel 10 via la canalisation 15 et les diffuseurs d'air 16.

On observe alors une activité des bactéries AOB à l'intérieur du réacteur biologique séquentiel 10. L'eau à traiter contenue dans le réacteur biologique séquentiel 10 subit ainsi une étape aérée de nitritation.

Au cours de la nitritation, les bactéries AOB agissent sur les ions ammonium présents dans l'eau contenue dans le réacteur biologique séquentiel 10 pour former des nitrites en consommant de l'oxygène.

Les concentrations en nitrites et en ammonium sont mesurées en ligne par la mise en oeuvre de l'armoire de commandes 20 et des sondes de nitrites 22 et d'ammonium 21. Dans une variante, ces mesures pourront ne pas être effectuées en continu, mais par exemple à fréquence régulière. La sonde de nitrites 22 permet de mesurer en ligne la concentration en nitrites de l'eau contenue dans le réacteur biologique séquentiel 10.

L'alimentation en eau du réacteur est contrôlée. Au cours de ce contrôle de l'alimentation, l'armoire de commande 20 :
- calcule la somme de la concentration en nitrites et de la concentration en ammonium ;
- compare la somme à une première valeur seuil égale à 100mgN/L.

Dès que cette somme est supérieure à la première valeur seuil, l'armoire de commande 20 stoppe le fonctionnement de la pompe 13 en sorte que l'alimentation en eau à traiter du réacteur biologique séquentiel 10 est arrêtée.

La durée de l'étape aérée de nitritation est contrôlée. Au cours de ce contrôle, l'armoire de commande 20 compare la concentration en nitrites à une deuxième valeur seuil prédéterminée égale à 50mgN-N02/L.

Dès que la concentration en nitrites est supérieure à ladite deuxième valeur seuil prédéterminée, l'armoire de commande pilote le surpresseur 14 et la vanne de régulation d'oxygène 26 en sorte qu'il ne délivre plus d'oxygène à l'intérieur du réacteur biologique séquentiel 10. Par conséquent, l'étape aérée de nitritation prend fin.

On observe alors une activité des bactéries hétérotrophes à l'intérieur du réacteur biologique séquentiel 10. L'eau à traiter contenue dans le réacteur biologique séquentiel 10 subit ainsi une étape anoxie de dénitritation.

Au cours de la dénitritation, les bactéries hétérotrophes agissent sur les nitrites présents dans l'eau contenue dans le réacteur biologique séquentiel 10 pour former du diazote gazeux en consommant le substrat carboné présent dans le réacteur biologique séquentiel 10.

L'étape anoxie de dénitritation comprend une étape d'apport en carbone dans le réacteur biologique séquentiel 10. Cet apport en carbone est contrôlé. Au cours du contrôle de l'apport en carbone, l'armoire de commande 20 compare la concentration en nitrites avec une quatrième valeur seuil prédéterminée égale à 10mgN-NO2/L.

Dès que la concentration en nitrites est inférieure à cette quatrième valeur seuil, l'armoire de commande pilote la pompe 19 de manière à ce que l'injection de carbone dans le réacteur biologique séquentiel 10 soit stoppée. Le carbone injecté peut se présenter sous la forme d'un liquide, d'une solution de méthanol, d'éthanol ou de glycérol ou de tout autre substrat carboné.

La durée de l'étape anoxie de dénitritation est contrôlée. Au cours de ce contrôle, l'armoire de commande 20 compare la concentration en nitrites à une troisième valeur seuil prédéterminée égale à 2mgN-NO2/L.

Dès que la concentration en nitrites est inférieure à cette troisième valeur seuil prédéterminée, l'armoire de commande 20 pilote l'arrêt de l'étape anoxie de dénitritation.

De nouvelles étapes d'alimentation, de nitritation aérée puis de dénitritation anoxie sont mises en oeuvre de façon à traiter une nouvelle portion du volume total d'eau à traiter. Dans ce mode de réalisation, le procédé de traitement comprend donc plusieurs sous-cycles comprenant chacun une étape d'alimentation, une étape de nitritation aérée et une étape de dénitritation anoxie. Une pluralité de sous-cycles est mise en oeuvre jusqu'à ce que le niveau haut 28 du réacteur biologique 10 soit atteint.

Dès que l'ensemble du volume d'eau est traité, c'est-à-dire que le niveau haut 28 du réacteur biologique 10 est atteint, l'agitation au sein du réacteur biologique séquentiel 10 est arrêtée, en sorte que l'eau contenue dans ce réacteur subit une décantation. Les matières en suspension sont alors séparées de l'eau traitée. La décantation terminée, les phases d'extraction (eau et boues) commencent. Les boues formées au cours de cette décantation sont extraites du réacteur via la canalisation d'extraction 23. L'eau traitée est extraite du réacteur via la canalisation d'extraction 24.

Dans ce mode de réalisation, un cycle complet de traitement, c'est-à-dire un cycle permettant le traitement de l'ensemble du volume d'eau à traiter (volume défini par le niveau haut 28 du réacteur 10) comprend donc plusieurs sous-cycles (alimentation, nitritation aérée et dénitritation anoxie), une décantation et une extraction d'eau traitée et de boues. L'extraction de boues permet de contrôler l'âge de boue du procédé.

Dans ce mode de réalisation, l'alimentation en eau, l'injection de carbone et l'injection d'oxygène dans le réacteur biologique séquentiel sont contrôlées au moins par la mesure des nitrites via la sonde de mesure des nitrites 22. Dans des variantes seulement certains de ces paramètres pourront être contrôlés.

Dans une variante, l'ensemble du volume d'eau à traiter pourra être introduit dans le réacteur biologique séquentiel 10 en une seule fois. Dans ce cas, un seul sous-cycle sera mis en oeuvre.

### 7.3.2. Configuration Nitritation-Déammonification

### 7.3.2.1 Cas d'un effluent non carencé en Alcalinité

Un procédé selon l'invention de traitement d'une eau chargée en azote sous forme d'ammonium non carencée en alcalinité, mettant en oeuvre un processus de type nitritation_/déammonification par des bactéries anammox dans un seul réacteur biologique séquentiel va à présent être décrit.

Selon ce mode de réalisation, le procédé de traitement consiste à traiter l'eau par portions successives du volume total à traiter.

Selon un tel procédé, le réacteur biologique séquentiel 10 est alimenté en eau à traiter au cours d'une première étape d'alimentation. Pour cela, l'armoire de commande 20 pilote la mise en oeuvre de la pompe 13 en sorte que de l'eau à traiter contenue dans la cuve tampon 11 soit déversée via la canalisation d'alimentation 12 dans le réacteur biologique séquentiel 10.

L'armoire de commande 20 pilote en parallèle la mise en oeuvre du surpresseur 14 et de la vanne de régulation d'oxygène 26 en sorte que de l'oxygène soit introduit dans le réacteur biologique séquentiel 10 via la canalisation 15 et les diffuseurs d'air 16.

On observe alors une activité des bactéries AOB à l'intérieur du réacteur biologique séquentiel 10. L'eau à traiter contenue dans le réacteur biologique séquentiel 10 subit ainsi une étape aérée de nitritation dans laquelle sont impliquées les bactéries AOB.

Au cours de la nitritation, les bactéries AOB agissent sur l'ammonium présent dans l'eau contenue dans le réacteur biologique séquentiel 10 pour former des nitrites en consommant de l'oxygène.

Les concentrations en nitrites et en ammonium sont mesurées en ligne par la mise en oeuvre de l'armoire de commande 20 et des sondes de nitrites 22, d'ammonium 21 et d'oxygène 25. La sonde de nitrites 22 permet de mesurer en ligne la concentration en nitrites de l'eau contenue dans le réacteur biologique séquentiel 10. La sonde de mesure d'ammonium 21 permet de mesurer en ligne la concentration en ammonium de l'eau contenue dans le réacteur biologique séquentiel 10.

L'alimentation en eau du réacteur est contrôlée. Au cours de ce contrôle de l'alimentation, l'armoire de commande 20 :
- calcule la somme de la concentration en nitrites et de la concentration en ammonium ;
- compare la somme à une première valeur seuil égale à 100mgN/L.

Dès que cette somme est supérieure à la première valeur seuil, l'armoire de commande 20 stoppe le fonctionnement de la pompe 13 en sorte que l'alimentation en eau à traiter du réacteur biologique séquentiel 10 est arrêtée.

La durée de l'étape aérée de nitritation est contrôlée. Au cours de ce contrôle, l'armoire de commande 20 compare la concentration en nitrites à une deuxième valeur seuil prédéterminée égale à 70mgN-NO2/L.

Dès que la concentration en nitrites est supérieure à ladite deuxième valeur seuil prédéterminée, l'armoire de commande pilote le surpresseur 14 et la vanne de régulation d'oxygène 26 en sorte qu'il ne délivre plus d'oxygène à l'intérieur du réacteur biologique séquentiel 10. Par conséquent, l'étape aérée de nitritation prend fin.

Une deuxième alimentation, sans aération, est effectuée. La deuxième alimentation en eau du réacteur est contrôlée. Au cours de ce contrôle de l'alimentation, l'armoire de commande 20 :
- calcule le ratio concentration en ammonium sur concentration en nitrites.
- compare le ratio à ladite cinquième valeur seuil égale à 0,8.

Dès que ce ratio est supérieur à ladite cinquième valeur seuil, l'armoire de commande 20 stoppe le fonctionnement de la pompe 13 en sorte que l'alimentation en eau à traiter du réacteur biologique séquentiel 10 est arrêtée.

Les concentrations en ammonium et en nitrites sont alors propices au traitement de l'ammonium et des nitrites contenus dans l'effluent. On observe alors une activité des bactéries anammox à l'intérieur du réacteur biologique séquentiel 10. L'eau à traiter contenue dans le réacteur biologique séquentiel 10 subit ainsi une étape anoxie de déammonification.

Au cours des phases anoxies, les bactéries anammox agissent sur l'ammonium et sur les nitrites présents dans l'eau pour former du diazote gazeux.

La durée de l'étape anoxie de déammonification est contrôlée. Au cours de ce contrôle, l'armoire de commande 20 compare la concentration en nitrites à ladite troisième valeur seuil prédéterminée égale à 2mgN-NO2/L

Dès que la concentration en nitrites est inférieure à cette valeur seuil prédéterminée, l'armoire de commande 20 pilote l'arrêt de l'étape anoxie de déammonification.

De nouvelles premières étapes d'alimentation, de nitritation aérée, de deuxième alimentation puis de déammonification anoxie sont mises en oeuvre de façon à traiter une nouvelle portion du volume total d'eau à traiter. Dans ce mode de réalisation, le procédé de traitement comprend donc plusieurs sous-cycles comprenant chacun une première étape d'alimentation, une étape de nitritation aérée, une deuxième étape d'alimentation non aérée et une étape de déammonification anoxie. Une pluralité de sous-cycles est mise en oeuvre jusqu'à ce que le niveau haut 28 du réacteur biologique 10 soit atteint pendant une première ou une deuxième étape d'alimentation. Ce niveau haut stoppe l'alimentation et déclenche une dernière étape anoxie de déammonification.

Dès que l'ensemble du volume d'eau est traité, c'est-à-dire que le niveau haut 28 du réacteur biologique 10 est atteint et que la dernière phase anoxie a eu lieu, l'agitation au sein du réacteur biologique séquentiel 10 est arrêtée, en sorte que l'eau contenue dans ce réacteur subisse une décantation. Les matières en suspension dans l'eau sont alors séparées de l'eau. Les boues formées au cours de cette décantation sont extraites du réacteur via la canalisation d'extraction 23. L'eau traitée est extraite du réacteur via la canalisation d'extraction 24.

Dans ce mode de réalisation, un cycle complet de traitement comprend donc au moins un sous-cycle (première alimentation, nitritation aérée, deuxième alimentation et déammonification anoxie), une décantation et une extraction d'eau traitée et de boues. L'extraction de boues permet de contrôler l'âge de boue du procédé.

Dans une variante, l'ensemble du volume d'eau à traiter pourra être introduit dans le réacteur biologique séquentiel 10 en deux fois mettant en oeuvre qu'un seul sous-cycle.

### 7.3.2.2 Cas d'un effluent carencé en Alcalinité

Un procédé selon l'invention de traitement d'une eau chargée en azote sous forme d'ammonium et carencée en alcalinité, mettant en oeuvre un processus de type nitritation-déammonification par des bactéries anammox dans un seul réacteur biologique séquentiel va à présent être décrit.

Dans cet exemple, l'effluent est carencé en alcalinité de telle manière que la nitritation totale de l'ammoniaque en nitrite n'est pas possible, la quantité d'alcalinité disponible dans l'effluent n'étant pas suffisant pour conserver un pH permettant aux bactéries AOB de fonctionner.

Selon ce mode de réalisation, le procédé de traitement consiste à traiter l'eau par portions successives du volume total à traiter.

Selon un tel procédé, le réacteur biologique séquentiel 10 est alimenté en eau à traiter. Pour cela, l'armoire de commande 20 pilote la mise en oeuvre de la pompe 13 en sorte que de l'eau à traiter contenue dans la cuve tampon 11 soit déversée via la canalisation d'alimentation 12 dans le réacteur biologique séquentiel 10.

L'armoire de commande 20 pilote en parallèle la mise en oeuvre du surpresseur 14 et de la vanne de régulation d'oxygène 26 en sorte que de l'oxygène soit introduit dans le réacteur biologique séquentiel 10 via la canalisation 15 et les diffuseurs d'air 16.

On observe alors une activité des bactéries AOB à l'intérieur du réacteur biologique séquentiel 10. L'eau à traiter contenue dans le réacteur biologique séquentiel 10 subit ainsi une étape aérée de nitritation dans laquelle sont impliquées les bactéries AOB.

Au cours de la nitritation, les bactéries AOB agissent sur l'ammonium présent dans l'eau contenue dans le réacteur biologique séquentiel 10 pour former des nitrites en consommant de l'oxygène.

Les concentrations en nitrites et en ammonium sont mesurées en ligne par la mise en oeuvre de l'armoire de commandes 20 et des sondes de nitrites 22, d'ammonium 21 et d'oxygène 25. La sonde de nitrites 22 permet de mesurer en ligne la concentration en nitrites de l'eau contenue dans le réacteur biologique séquentiel 10. La sonde de mesure d'ammonium 21 permet de mesurer la concentration en ammonium de l'eau contenue dans le réacteur biologique séquentiel 10

L'alimentation en eau du réacteur est contrôlée. Au cours de ce contrôle de l'alimentation, l'armoire de commande 20 :
- calcule la somme de la concentration en nitrites et de la concentration en ammonium ;
- compare la somme à une première valeur seuil égale à 100mgN/L ;

Dès que cette somme est supérieure à la première valeur seuil, l'armoire de commande 20 stoppe le fonctionnement de la pompe 13 en sorte que l'alimentation en eau à traiter du réacteur biologique séquentiel 10 est arrêtée.

La durée de l'étape aérée de nitritation est contrôlée. Au cours de ce contrôle, l'armoire de commande 20 :
- compare la concentration en nitrites à une deuxième valeur seuil prédéterminée égale à 50mgN-NO2/L.
- calcule le ratio concentration en ammonium sur concentration en nitrites et le compare à une cinquième valeur seuil égale à 0,8 ;

Dès que la concentration en nitrites est supérieure à ladite deuxième valeur seuil prédéterminée ou que le ratio concentration en ammonium sur concentration en nitrites est inférieur à ladite cinquième valeur seuil, l'armoire de commande pilote le surpresseur 14 et la vanne de régulation d'oxygène 26 en sorte qu'il ne délivre plus d'oxygène à l'intérieur du réacteur biologique séquentiel 10. Par conséquent, l'étape aérée de nitritation prend fin.

Les concentrations en ammonium et en nitrites sont alors propices au traitement de l'ammonium et des nitrites contenus dans l'effluent. On observe alors une activité des bactéries anammox à l'intérieur du réacteur biologique séquentiel 10. L'eau à traiter contenue dans le réacteur biologique séquentiel 10 subit ainsi une étape anoxie de déammonification.

Au cours des phases anoxies, les bactéries anammox agissent sur l'ammonium et sur les nitrites présents dans l'eau pour former du diazote gazeux.

La durée de l'étape anoxie de déammonification est contrôlée. Au cours de ce contrôle, l'armoire de commande 20 compare la concentration en nitrites à ladite troisième valeur seuil prédéterminée égale à 2mgN-NO2/L

Dès que la concentration en nitrites est inférieure à cette troisième valeur seuil prédéterminée, l'armoire de commande 20 pilote l'arrêt de l'étape anoxie de déammonification.

De nouvelles étapes d'alimentation, de nitritation aérée puis de déammonification anoxie sont mises en oeuvre de façon à traiter une nouvelle portion du volume total d'eau à traiter. Dans ce mode de réalisation, le procédé de traitement comprend donc plusieurs sous-cycles comprenant chacun une étape d'alimentation, une étape de nitritation aérée et une étape de déammonification anoxie. Une pluralité de sous-cycles est mise en oeuvre jusqu'à ce que le niveau haut 28 du réacteur biologique 10 soit atteint pendant une étape d'alimentation. Ce niveau haut stoppe l'alimentation et déclenche une dernière étape aérée de nitritation suivi d'une dernière étape anoxie de déammonification.

Dès que l'ensemble du volume d'eau est traité, c'est-à-dire que le niveau haut 28 du réacteur biologique 10 est atteint et que la dernière phase aérée de nitritation et anoxie de déamonification ont eu lieu, l'agitation au sein du réacteur biologique séquentiel 10 est arrêtée, en sorte que l'eau contenue dans ce réacteur subisse une décantation. Les matières en suspension dans l'eau sont alors séparées de l'eau. Les boues formées au cours de cette décantation sont extraites du réacteur via la canalisation d'extraction 23. L'eau traitée est extraite du réacteur via la canalisation d'extraction 24.

Dans ce mode de réalisation, un cycle complet de traitement comprend donc au moins un sous-cycle (alimentation, nitritation aérée, déammonification anoxie), une décantation et une extraction d'eau traitée et de boues. L'extraction de boues permet de contrôler l'âge de boue du procédé.

Dans une variante, l'ensemble du volume d'eau à traiter pourra être introduit dans le réacteur biologique séquentiel 10 en une seule fois.

### 7.4. Essai

Des essais ont été menés de façon à mettre en évidence l'efficacité d'une technique selon l'invention.

Ces essais ont consisté à traiter un effluent par shunt des nitrates au sein d'un RBS de 500 litres.

Toutes les étapes du traitement ont été réalisées dans un même réacteur de manière séquencée avec un volume maximum d'effluent à traiter ajouté par cycle complet de 215 litres. La température était de 25°C et la concentration en oxygène dissous pendant les phases aérées était faible (0,5 mgO₂/L) afin de favoriser le shunt dans le RBS. Ce RBS était alimenté par les filtrats de la table d'égouttage issu de la déshydratation des boues digérées d'un digesteur anaérobie d'une station d'épuration. La composition moyenne du filtrat est présentée dans le tableau ci-dessous.

| | **N-NH₄ (mgN/L)** | **DCO soluble (mg/L)** | **P-PO₄³⁻ (mgP/L)** | **MES (mg/L)** | **TAC (°F)** | **pH** |
|---|---|---|---|---|---|---|
| **Mini** | 239 | 96 | 90 | 38 | 107 | 7,4 |
| **Maxi** | 721 | 218 | 145 | 1568 | 281 | 8,1 |
| **Moyenne** | **466** | **147** | **109** | **216** | **163** | **7,68** |
| **Ecart type** | 127 | 24,2 | 12,2 | 284 | 43 | 0,2 |
| ***Nombre d'échantillons.*** | *88* | *53* | *22* | *37* | *24* | *23* |

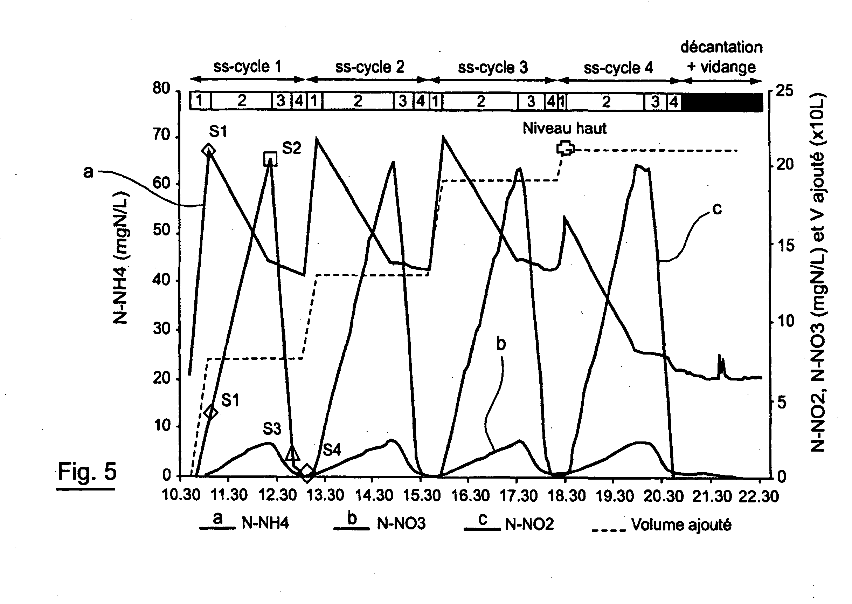

La figure 5 illustre les profils de concentration en NH₄, en NO₂ et en NO₃ dans le réacteur ainsi que le volume d'effluent à traiter ajouté dans le réacteur au cours du traitement de l'effluent par la mise en oeuvre d'un procédé selon l'invention par shunt des nitrates comprenant quatre sous-cycles.

Comme cela est représenté, chaque sous-cycle comprend :
- une phase (1) d'alimentation aérée du réacteur (au cours de laquelle commence la nitritation) ;
- une phase (2) aérée (au cours de laquelle se poursuit la nitritation) ;
- une phase (3) anoxie avec dopage en éthanol (au cours de laquelle commence la dénitritation) ;
- une phase (4) anoxie sans dopage en éthanol (au cours de laquelle se poursuit la dénitritation).

La valeur du premier seuil S1, correspondant à la somme de la concentration en N-NH₄ et N-NO₂ dans le réacteur au-delà de laquelle l'alimentation du réacteur est arrêtée et son aération se poursuit seule, était égale à 70 mgN/L.

La valeur du deuxième seuil S2, correspondant à la concentration en NO₂ dans le réacteur au-delà de laquelle l'aération du réacteur est arrêtée et la phase anoxie avec dopage débute, était égale à 20 mgN-NO₂/L.

La valeur du quatrième seuil S4, correspondant à la concentration en NO₂ dans le réacteur en dessous de laquelle la phase anoxie avec dopage en substrat carboné est arrêtée et la phase anoxie sans dopage en substrat carboné débute, était égale à 2 mgN-NO₂/L.

La valeur du troisième seuil S3 correspondant à la concentration en NO₂ en dessous de laquelle la phase anoxie sans dopage en substrat carboné est arrêtée et la phase d'alimentation du sous-cycle suivant est initiée était égale à 1 mgN-NO₂/L.

Les quatre sous-cycles s'enchaînent en fonction des valeurs des seuils définis dans le régulateur jusqu'à ce que le niveau haut soit atteint dans le réacteur biologique séquentiel lors d'une étape d'alimentation.

Une fois le niveau haut atteint dans le réacteur, le sous-cycle au cours duquel le niveau haut du réacteur est atteint, en l'occurrence le quatrième sous-cycle, se poursuit. Celui-ci est suivi d'une étape de décantation, puis d'une étape de vidange de l'effluent traité qui marque la fin du cycle complet.

Le volume d'eau ajouté dans le réacteur à chaque sous-cycle peut être différent et dépend de la concentration en NH₄ dans le réacteur.

Lors de la dernière étape d'aération du réacteur, une étape de soutirage des boues est mise en oeuvre de façon à contrôler l'âge des boues présentes dans le réacteur.

Les résultats de cet essai ont permis de mettre en évidence le fait que la mise en oeuvre d'un procédé selon l'invention conduit à limiter très fortement la formation de NO₃ dans le réacteur et donc à éviter le traitement de l'eau dans le réacteur par nitrificaion-dénitrification au profit d'un traitement par nitritation-dénitritation.

## Revendications

1. Procédé de traitement d'une eau chargée en azote sous forme d'ammonium par nitritation-dénitritation, ledit procédé comprenant au moins :
- une première étape (i) d'alimentation en ladite eau d'un réacteur biologique séquentiel (10) ;
- une étape (ii) aérée de nitritation;
- une étape (iii) anoxie de dénitritation ;
- une étape (iv) d'extraction d'une eau traitée dudit réacteur ;
**caractérisé en ce qu'**il comprend en outre une mesure en ligne de la concentration en nitrites de ladite eau présente dans ledit réacteur, et au moins une étape de contrôle d'au moins une étape du procédé, ladite étape de contrôle tenant compte des résultats de ladite mesure en ligne de la concentration en nitrites.

2. Procédé selon la revendication 1, **caractérisé en ce qu'**il comprend une étape de contrôle de ladite première étape (i) d'alimentation.

3. Procédé selon la revendication 2, **caractérisé en ce qu'**il comprend une mesure en ligne de la concentration en ions ammonium de ladite eau présente dans ledit réacteur (10), et **en ce que** ladite étape de contrôle de ladite première étape d'alimentation comprend les étapes suivantes :
- calcul de la somme de ladite concentration en nitrites et de ladite concentration en ammonium ;
- comparaison de ladite somme à une première valeur seuil prédéterminée ;
- arrêt de ladite première étape (i) d'alimentation dès que ladite somme est supérieure à ladite première valeur seuil.

4. Procédé selon l'une quelconque des revendications 1 à 3, **caractérisé en ce qu'**il comprend une étape de contrôle de la durée de ladite étape (ii) aérée de nitritation.

5. Procédé selon la revendication 4, **caractérisé en ce que** ladite étape de contrôle de la durée de ladite étape (ii) aérée de nitritation comprend les étapes suivantes :
- comparaison de ladite concentration en nitrites à une deuxième valeur seuil prédéterminée ;
- arrêt de ladite étape (ii) aérée de nitritation dès que ladite concentration en nitrites est supérieure à ladite deuxième valeur seuil prédéterminée.

6. Procédé selon l'une quelconque des revendication 1 à 5, **caractérisé en ce qu'**il comprend une étape de contrôle de la durée de ladite étape (iii) anoxie de dénitritation.

7. Procédé selon la revendication 6, **caractérisé en ce que** ladite étape de contrôle de la durée de ladite étape (iii) anoxie de dénitritation comprend les étapes suivantes :
- comparaison de ladite concentration en nitrites à une troisième valeur seuil prédéterminée ;
- arrêt de ladite étape (iii) anoxie de dénitritation dès que ladite concentration en nitrites est inférieure à ladite troisième valeur seuil prédéterminée.

8. Procédé selon l'une quelconque des revendications 1 à 7, **caractérisé en ce que** ladite étape (iii) anoxie de dénitritation comprend une étape de mise en contact de ladite eau avec des bactéries hétérotrophes.

9. Procédé selon la revendication 8, **caractérisé en ce que** ladite étape (iii) anoxie de dénitritation comprend une étape d'injection de carbone dans ledit réacteur, et **en ce que** ledit procédé comprend une étape de contrôle de ladite étape d'injection de carbone, ladite étape de contrôle de ladite étape d'injection de carbone comprenant les étapes suivantes :
- comparaison de ladite concentration en nitrites avec une quatrième valeur seuil prédéterminée ;
- arrêt de ladite étape d'injection en carbone dès que ladite concentration en nitrites est inférieure à ladite quatrième valeur seuil.

10. Procédé selon la revendication 8 ou 9, **caractérisé en ce que** ladite première valeur seuil est comprise entre 1 mgN/L et 400 mgN/L

11. Procédé selon l'une quelconque des revendications 8 à 10, **caractérisé en ce que** ladite deuxième valeur seuil est comprise entre 1 mgN-NO2/L et 250 mgN-NO2/L

12. Procédé selon l'une quelconque des revendications 8 à 11, **caractérisé en ce que** ladite troisième valeur seuil est comprise entre 0 mgN-NO2/L et 120 mgN-NO2/L

13. Procédé selon l'une quelconque des revendications 8 à 12, **caractérisé en ce que** ladite quatrième valeur seuil est comprise entre 0 mgN-NO2/L et 120 mgN-NO2/L

14. Procédé selon l'une quelconque des revendications 1 à 7, **caractérisé en ce que** ladite étape (iii) anoxie de dénitritation comprend une étape de mise en contact de ladite eau avec des bactéries anammox.

15. Procédé selon la revendication 14, **caractérisé en ce que** ladite étape (ii) aérée de nitritation est suivie d'une deuxième étape d'alimentation sans aération qui comprend les étapes suivantes :
- calcul du ratio de ladite concentration en ammonium sur ladite concentration en nitrites ;
- comparaison dudit ratio à une cinquième valeur seuil ;
- arrêt de ladite deuxième étape d'alimentation dès que ledit ratio est supérieur à ladite cinquième valeur seuil.

16. Procédé selon la revendication 14, **caractérisé en ce que** ladite étape de contrôle de ladite étape (ii) aérée de nitritation comprend en outre les étapes suivantes :
- calcul du ratio de ladite concentration en ammonium sur ladite concentration en nitrites ;
- comparaison dudit ratio à une cinquième valeur seuil ;
- arrêt de ladite étape (ii) aérée de nitritation dès que ladite concentration en nitrite est supérieure à ladite deuxième valeur seuil prédéterminée ou que ledit ratio est inférieur à ladite cinquième valeur seuil.

17. Procédé selon l'une quelconque des revendications 14 à 16, **caractérisé en ce que** ladite première valeur seuil est comprise entre 1 et 300mgN/L.

18. Procédé selon l'une quelconque des revendications 14 à 17, **caractérisé en ce que** ladite deuxième valeur seuil est comprise entre 1 et 150mgN-NO2/L.

19. Procédé selon l'une quelconque des revendications 14 à 18, **caractérisé en ce que** ladite troisième valeur seuil est comprise entre 0 et 100mgN-NO2/L

20. Procédé selon l'une quelconque des revendications 15 à 19, **caractérisé en ce que** ladite cinquième valeur seuil est comprise entre 0.6 et 1.2.

21. Installation de traitement d'une eau par nitritation-dénitritation comprenant au moins :
- un réacteur biologique séquentiel (10) ;
- des moyens d'alimentation en eau (11, 12, 13) dudit réacteur (10) ;
- des moyens d'aération (14, 15, 16) dudit réacteur (10) ;
- des moyens de contrôle (20, 21, 22) desdits moyens d'alimentation en eau (11, 12, 13) dudit réacteur (10) et desdits moyens d'aération (14, 15, 16) dudit réacteur (10) ;
- une canalisation d'extraction d'eau traitée 24 dudit réacteur (10) ; **caractérisé en ce que** lesdits moyens de contrôle (20, 21, 22) comprennent des moyens de mesure en ligne de la concentration en nitrites de ladite eau présente dans ledit réacteur (10).

## Patentansprüche

1. Verfahren zur Behandlung von mit Stickstoff in Form von Ammonium belastetem Wasser durch Nitrosierung-Denitrosierung, wobei das Verfahren wenigstens umfasst:
- einen ersten Schritt (i) der Einspeisung des Wassers in einen sequentiellen biologischen Reaktor (10);
- einen belüfteten Schritt (ii) der Nitrosierung;
- einen anoxischen Schritt (iii) der Denitrosierung;
- einen Schritt (iv) die Förderung des behandelten Wassers aus dem Reaktor;
**dadurch gekennzeichnet, dass** es ferner eine Online-Messung der Konzentration an Nitriten des im Reaktor befindlichen Wassers umfasst und wenigstens einen Kontrollschritt wenigstens eines Schritts des Verfahrens, wobei der Kontrollschritt die Ergebnisse der Online-Messung der Konzentration an Nitriten berücksichtigt.

2. Verfahren nach Anspruch 1, **dadurch gekennzeichnet, dass** es einen Kontrollschritt des ersten Schritts (i) der Einspeisung umfasst.

3. Verfahren nach Anspruch 2, **dadurch gekennzeichnet, dass** es eine Online-Messung der Konzentration an Ammoniumionen des im Reaktor (10) befindlichen Wassers umfasst und dadurch, dass der Kontrollschritt des ersten Schritts der Einspeisung die folgenden Schritte umfasst:
- das Berechnen der Summe der Konzentration an Nitriten und der Konzentration an Ammonium;
- das Vergleichen der Summe mit einem ersten vorherbestimmten Schwellenwert;
- das Stoppen des ersten Schritts (i) der Einspeisung, sobald die Summe größer ist als der erste Schwellenwert.

4. Verfahren nach einem der Ansprüche 1 bis 3, **dadurch gekennzeichnet, dass** es einen Kontrollschritt der Dauer des belüfteten Schritts (ii) der Nitrosierung umfasst.

5. Verfahren nach Anspruch 4, **dadurch gekennzeichnet, dass** der Kontrollschritt der Dauer des belüfteten Schritts (ii) der Nitrosierung die folgenden Schritte umfasst:
- das Vergleichen der Konzentration an Nitriten mit einem zweiten vorherbestimmten Schwellenwert;
- das Stoppen des belüfteten Schritts (ii) der Nitrosierung, sobald die Konzentration an Nitriten größer ist als der zweite vorherbestimmte Schwellenwert.

6. Verfahren nach einem der Ansprüche 1 bis 5, **dadurch gekennzeichnet, dass** es einen Kontrollschritt der Dauer des anoxischen Schritts (iii) der Denitrosierung umfasst.

7. Verfahren nach Anspruch 6, **dadurch gekennzeichnet, dass** der Kontrollschritt der Dauer des anoxischen Schritts (iii) der Denitrosierung die folgenden Schritte umfasst:
- das Vergleichen der Konzentration an Nitriten mit einem dritten vorherbestimmten Schwellenwert;
- das Stoppen des anoxischen Schritts (iii) der Denitrosierung, sobald die Konzentration an Nitriten kleiner ist als der dritte vorherbestimmte Schwellenwert.

8. Verfahren nach einem der Ansprüche 1 bis 7, **dadurch gekennzeichnet, dass** der anoxische Schritt (iii) der Denitrosierung einen Schritt des in Kontakt Bringens des Wassers mit heterotrophen Bakterien umfasst.

9. Verfahren nach Anspruch 8, **dadurch gekennzeichnet, dass** der anoxische Schritt (iii) der Denitrosierung einen Schritt der Injektion von Kohlenstoff in den Reaktor umfasst und dadurch, dass das Verfahren einen Kontrollschritt des Schritts der Injektion von Kohlenstoff umfasst, wobei der Kontrollschritt des Schritts der Injektion von Kohlenstoff die folgenden Schritte umfasst:
- das Vergleichen der Konzentration an Nitriten mit einem vierten vorherbestimmten Schwellenwert;
- das Stoppen des Schritts der Injektion von Kohlenstoff, sobald die Konzentration an Nitriten kleiner als der vierte Schwellenwert ist.

10. Verfahren nach Anspruch 8 oder 9, **dadurch gekennzeichnet, dass** der erste Schwellenwert zwischen 1 mgN/l und 400 mgN/l liegt.

11. Verfahren nach einem der Ansprüche 8 bis 10, **dadurch gekennzeichnet, dass** der zweite Schwellenwert zwischen 1 mgN-NO2/l und 250 mgN-NO2/l liegt.

12. Verfahren nach einem der Ansprüche 8 bis 11, **dadurch gekennzeichnet, dass** der dritte Schwellenwert zwischen 0 mgN-NO2/l und 120 mgN-NO2/l liegt.

13. Verfahren nach einem der Ansprüche 8 bis 12, **dadurch gekennzeichnet, dass** der vierte Schwellenwert zwischen 0 mgN-NO2/l und 120 mgN-NO2/l liegt.

14. Verfahren nach einem der Ansprüche 1 bis 7, **dadurch gekennzeichnet, dass** der anoxische Schritt (iii) der Denitrosierung einen Schritt des in Kontakt Bringens des Wassers mit Anammox-Bakterien umfasst.

15. Verfahren nach Anspruch 14, **dadurch gekennzeichnet, dass** der belüftete Schritt (ii) der Nitrosierung gefolgt wird von einem zweiten Schritt der Einspeisung ohne Belüftung, der die folgenden Schritte umfasst:
- das Berechnen des Verhältnisses der Konzentration an Ammonium zur Konzentration an Nitriten;
- das Vergleichen des Verhältnisses mit einem fünften Schwellenwert;
- das Stoppen des zweiten Schritts der Einspeisung, sobald das Verhältnis größer ist als der fünfte Schwellenwert.

16. Verfahren nach Anspruch 14, **dadurch gekennzeichnet, dass** der Kontrollschritt des belüfteten Schritts (ii) der Nitrosierung ferner die folgenden Schritte umfasst:
- das Berechnen des Verhältnisses der Konzentration an Ammonium zur Konzentration an Nitriten;
- das Vergleichen des Verhältnisses mit einem fünften Schwellenwert;
- das Stoppen des belüfteten Schritts (ii) der Nitrosierung, sobald die Konzentration an Nitrit größer ist als der zweite vorherbestimmte Schwellenwert oder das Verhältnis kleiner ist als der fünfte Schwellenwert.

17. Verfahren nach einem der Ansprüche 14 bis 16, **dadurch gekennzeichnet, dass** der erste Schwellenwert zwischen 1 und 300 mgN/l liegt.

18. Verfahren nach einem der Ansprüche 14 bis 17, **dadurch gekennzeichnet, dass** der zweite Schwellenwert zwischen 1 und 150 mgN-NO2/l liegt.

19. Verfahren nach einem der Ansprüche 14 bis 18, **dadurch gekennzeichnet, dass** der dritte Schwellenwert zwischen 0 und 100 mgN-NO2/l liegt.

20. Verfahren nach einem der Ansprüche 15 bis 19, **dadurch gekennzeichnet, dass** der fünfte Schwellenwert zwischen 0,6 und 1,2 liegt.

21. Anlage zur Behandlung von Wasser durch Nitrosierung - Denitrosierung, die wenigstens umfasst:
- einen sequentiellen biologischen Reaktor (10);
- Mittel zum Einspeisen von Wasser (11,12,13) des Reaktors (10);
- Mittel zum Belüften (14,15,16) des Reaktors (10);
- Kontrollmittel (20,21,22) der Mittel zum Einspeisen von Wasser (11,12,13) des Reaktors (10) und der Mittel zum Belüften (14,15,16) des Reaktors (10);
- eine Leitung zum Förderung von behandeltem Wasser 24 aus dem Reaktor (10);
**dadurch gekennzeichnet, dass** die Kontrollmittel (20,21,22) Mittel zum Online-Messen der Konzentration an Nitriten des im Reaktor (10) befindlichen Wassers umfassen.

## Claims

1. Method for treating water laden with nitrogen in the form of ammonium by means of nitritation-denitritation, said method comprising at least:
- a first feeding step (i) of a sequential bioreactor (10) with said water;
- an aerated nitritation step (ii);
- an anoxia denitritation step (iii);
- a step (iv) of extraction of treated water from said reactor;
**characterized in that** it also comprises an in-line measurement of the concentration of nitrites in said water present in said reactor, and at least one step of monitoring of at least one step of the method, said monitoring step taking into account results of said in-line measurement of the concentration of nitrites.

2. Method according to claim 1, **characterized in that** it comprises a step of monitoring of said first feeding step (i).

3. Method according to claim 2, **characterized in that** it comprises an in-line measurement of the concentration of ammonium ions of said water present in said reactor (10), and **in that** said step of monitoring said first feeding step comprises the following steps:
- calculation of the sum of said concentration of nitrites and said concentration of ammonium;
- comparison of said sum with a first predetermined threshold value;
- stopping of said first feeding step (i) when said sum is greater than said first threshold value.

4. Method according to any one of claims 1 to 3, **characterized in that** it comprises a step of monitoring of the duration of said aerated nitritation step (ii).

5. Method according to claim 4, **characterized in that** said step of monitoring of the duration of said aerated nitritation step (ii) comprises the following steps:
- comparison of said concentration of nitrites with a second predetermined threshold value;
- stopping of said aerated nitritation step (ii) when said concentration of nitrites is greater than said second predetermined threshold value.

6. Method according to any one of claims 1 to 5, **characterized in that** it comprises a step of monitoring of the duration of said anoxia denitritation step (iii).

7. Method according to claim 6, **characterized in that** said step of monitoring of the duration of said anoxia denitritation step (iii) comprises the following steps:
- comparison of said concentration of nitrites with a third predetermined threshold value;
- stopping of said anoxia denitritation step (iii) when said concentration of nitrites is less than said third predetermined threshold value.

8. Method according to any one of claims 1 to 7, **characterized in that** said anoxia denitritation step (iii) comprises a step of bringing said water into contact with heterotrophic bacteria.

9. Method according to claim 8, **characterized in that** said anoxia denitritation step (iii) comprises a step of injection of carbon into said reactor, and **in that** said method comprises a step of monitoring of said step of injection of carbon, said step of monitoring of said step of injection of carbon comprising the following steps:
- comparison of said concentration of nitrites with a fourth predetermined threshold value;
- stopping of said step of injection of carbon when said concentration of nitrites is less than said fourth threshold value.

10. Method according to claim 8 or 9, **characterized in that** said first threshold value is between 1 mg N/l and 400 mg N/l.

11. Method according to any one of claims 8 to 10, **characterized in that** said second threshold value is between 1 mg N-NO₂/l and 250 mg N-NO₂/l.

12. Method according to any one of claims 8 to 11, **characterized in that** said third threshold value is between 0 mg N-NO₂/l and 120 mg N-NO₂/l.

13. Method according to any one of claims 8 to 12, **characterized in that** said fourth threshold value is between 0 mg N-NO₂/l and 120 mg N-NO₂/l.

14. Method according to any one of claims 1 to 7, **characterized in that** said anoxia denitritation step (iii) comprises a step of bringing said water into contact with anammox bacteria.

15. Method according to claim 14, **characterized in that** said aerated nitritation step (ii) is followed by a second step of feeding without aeration which comprises the following steps:
- calculation of the ratio of said concentration of ammonium to said concentration of nitrites;
- comparison of said ratio with a fifth threshold value;
- stopping of said second feeding step when said ratio is greater than said fifth threshold value.

16. Method according to claim 14, **characterized in that** said step of monitoring of said aerated nitritation step (ii) also comprises the following steps:
- calculation of the ratio of said concentration of ammonium to said concentration of nitrites;
- comparison of said ratio with a fifth threshold value;
- stopping of said aerated nitritation step (ii) when said concentration of nitrite is greater than said second predetermined threshold value or when said ratio is less than said fifth threshold value.

17. Method according to any one of claims 14 to 16, **characterized in that** said first threshold value is between 1 and 300 mg N/l.

18. Method according to any one of claims 14 to 17, **characterized in that** said second threshold value is between 1 and 150 mg N-NO₂/l.

19. Method according to any one of claims 14 to 18, **characterized in that** said third threshold value is between 0 and 100 mg N-NO₂/l.

20. Method according to any one of claims 15 to 19, **characterized in that** said fifth threshold value is between 0.6 and 1.2.

21. Installation for treating water by nitritation-denitritation, comprising at least:
- a sequential biological reactor (10);
- means (11, 12, 13) for feeding of said reactor (10) with water;
- means (14, 15, 16) for aeration of said reactor (10) ;
- means (20, 21, 22) for monitoring of said means (11, 12, 13) for feeding of said reactor (10) with water and of said means (14, 15, 16) for aeration of said reactor (10);
- a pipeline (24) for extraction of treated water
from said reactor (10);
**characterized in that** said monitoring means (20, 21, 22) comprise means for in-line measurement of the concentration of nitrites in said water present in said reactor (10).
